# EUROPÄISCHE PATENTSCHRIFT

(11) **EP 3 542 979 B1**
(45) Veröffentlichungstag und Bekanntmachung des Hinweises auf die Patenterteilung: **02.02.2022**
(21) Anmeldenummer: 19161931.1
(22) Anmeldetag: 11.03.2019
(51) Int. Cl.: B26D 5/00, B26D 7/30, B26D 7/32, B26D 7/01, A22C 7/00, A22C 17/00

(54) **VERFAHREN ZUM VERPRESSEN UND ANSCHLIESSEND AUFSCHNEIDEN VON ELASTISCHEN LAIBEN, INSBESONDERE FLEISCH-LAIBEN SOWIE SCHNEIDEMASCHINE HIERFÜR**
METHOD FOR PRESSING AND SUBSEQUENTLY CUTTING ELASTIC LOAVES, IN PARTICULAR MEAT LOAVES AND MACHINE THEREFOR
PROCÉDÉ DE PRESSAGE ET ENSUITE DE DÉCOUPE DE MEULES ÉLASTIQUES, EN PARTICULIER DE PÂTONS DE VIANDE ET MACHINE DE COUPE CORRESPONDANTE

(30) Priorität: 19.03.2018 DE 102018106300
(43) Veröffentlichungstag der Anmeldung: 25.09.2019
(73) Patentinhaber: TVI Entwicklung und Produktion GmbH, 83052 Bruckmühl (DE)
(72) Erfinder: Völkl, Thomas, 83052 Bruckmühl (DE); Mayr, Martin, 83549 Eiselfing (DE)
(74) Vertreter: Weickmann & Weickmann PartmbB

(56) Entgegenhaltungen:
- EP-A1- 2 241 421
- EP-A1- 3 238 898
- DE-A1-102004 041 915

## Beschreibung

### I. Anwendungsgebiet

Die Erfindung betrifft das Verpressen eines Laibes aus einem elastischen Material, wie etwa eines Fleisch-Laibes, der im Ausgangszustand über seine Länge einen sich ändernden Querschnitt aufweist, zu einem über die Länge gleichen Querschnitt, und gegebenenfalls das anschließende Aufschneiden in, insbesondere möglichst gewichtsgenaue, Scheiben.

### II. Technischer Hintergrund

Für die Zwecke der vorliegenden Erfindung wird im Folgenden häufig von Fleisch-Laiben gesprochen, ohne die Erfindung auf diese spezielle Art eines Laibes aus elastischem Material zu beschränken.

Die Herstellung von gewichtsgenauen Scheiben oder Portionen aus einem elastischen Strang ist relativ einfach möglich, wenn der Strang, das so genannte Kaliber, über seine Länge überall den gleichen Querschnitt besitzt und aus einem homogenen, überall gleichen, elastischen Material besteht, wie etwa Wurst oder Käse.

Hierfür sind so genannte Slicer bekannt, die meist mit einem rotierenden, runden oder spiralförmigen, Messer, welches z.B. quer zum Strang vor- und zurückgefahren werden kann, jeweils eine Scheibe abschneiden, während der dabei meist freiliegende Strang kontinuierlich vorwärts gefahren wird.

Ein unregelmäßig geformter Laib aus gewachsenem Fleisch, z.B. eine Oberschale, hat diese Eigenschaften jedoch nicht, denn jedes Stück besitzt eine andere Größe und Gestaltung und darüber hinaus einen sich über die Länge ändernden Querschnitt und besteht aus Material-Anteilen unterschiedlicher Konsistenz, Elastizität und Komprimierbarkeit, beispielsweise aus Fett, Muskelgewebe, der umgebenden Silberhaut und gegebenenfalls auch noch Knochen wie bei einem Kotelett-Strang, die sich mechanisch sehr unterschiedlich verhalten.

In diesem Zusammenhang ist es bereits bekannt, einen solchen unregelmäßig geformten Laib zunächst so zu verformen, dass dieser zumindest an dem Ende, an dem die nächste Scheibe abgeschnitten wird, vorzugsweise über die gesamte Länge, einen definierten, bekannten Querschnitt besitzt, insbesondere im Zeitpunkt des Abschneidens der Scheibe.

Dann kann eine Relation zwischen der einstellbaren Dicke der Scheibe und dem gewünschten Gewicht der Scheibe hergestellt werden, wenn auch nicht exakt, da sich von einer Scheibe zur Nächsten die Zusammensetzung des Fleisches, dessen Komponenten unterschiedliche spezifische Gewichte aufweisen, bereits ändern kann.

Um diese Verformung zu erreichen, wird der - in der Regel leicht angefrorene - Laib meist zunächst in ein umfänglich geschlossenes Formrohr eingebracht, und in axialer Richtung mittels eines Längs-Pressstempels gegen einen Anschlag gepresst, sodass sich der Laib in seinem Querschnitt so aufweitet, dass er den gesamten inneren Freiraum des Formrohres ausfüllt und somit auch dessen Querschnitt annimmt.

Dabei können Formrohre unterschiedlichen Querschnittes benutzt werden, je nach den Abmessungen des Laibes.

Weiterhin kann zusätzlich der innere Querschnitt des Formrohres nach Einlegen des Laibes verändert werden, beispielsweise indem zwei einander gegenüberliegende Seitenwände des Formrohres aufeinander zu bewegt werden, und damit auch eine Querverpressung des Laibes bewirkt wird.

Meist wird hierfür - in Längsrichtung betrachtet - in die offene Seite einer Formrohr-Rinne ein passender Quer-Pressstempel radial eingefahren, der somit Bestandteil der Wandung des Formrohres ist.

Denn beginnend bei einem bestimmten Ausgangs-Querschnitt des inneren Freiraumes des Pressstempels ist bei Verpressung in nur einer Richtung, beispielsweise nur in Längsrichtung, eine wesentlich stärkere Verpressung durch Verkürzung des Laibes notwendig, als bei einer Aufteilung des Umform-Vorganges auf 2 oder gar 3 verschiedene Pressrichtungen.

Dadurch wird die innere Struktur des Laibes geschont, die insbesondere eine gerichtete Struktur ist, wie sie beispielsweise bei dem Muskel-Anteil eines länglichen Fleisch-Laibes gerichtet etwa in Längsrichtung des Fleisch-Laibes vorliegt.

Am Ende der Verpressung wird aus der Position der Pressstempel auch Querschnitt und Länge und damit Volumen und Gewicht des Laibes abgeschätzt, um die Dicke einer Scheibe festzulegen, die ein bestimmtes Gewicht aufweisen soll.

In diesem Zusammenhang ist es bereits bekannt, zwischen Presshüben auch Entlastungshübe durchzuführen:
Aus der DE 10 2004 041 915 A1 - die den nächstreichenden Stand der Technik bildet - findet ein Entlastungshub zum einen nur in Längsrichtung und zum anderen nicht beim Verpressen vor dem Aufschneiden, sondern nur während des Aufschneidens statt, indem nach dem Abtrennen jeder Scheibe und bevor diese aus der Portionier-Kammer entfernt wird, ein Entlastungshub durchgeführt wird.

### III. Darstellung der Erfindung

### a) Technische Aufgabe

Es ist daher die Aufgabe gemäß der Erfindung, ein Verfahren sowie eine Maschine zum Verpressen auf einen über die Länge gleich bleibenden Querschnitt des Laibes und vorzugsweise anschließendem Aufschneiden eines solchen Laibes zur Verfügung zu stellen, welches für das Material des Laibes möglichst schonend ist.

### b) Lösung der Aufgabe

Diese Aufgabe wird durch die Merkmale der Ansprüche 1 und 16 gelöst. Vorteilhafte Ausführungsformen ergeben sich aus den Unteransprüchen.

Hinsichtlich des Verfahrens ist es bereits bekannt, den zunächst noch unregelmäßig geformten Laib aus einem elastischen, meist nur geringfügig komprimierbaren, Material vor dem Aufschneiden in eine Form mit einem über die Länge gleich bleibenden Querschnitt zu bringen, indem der Laib beispielsweise in ein Formrohr eingebracht wird und darin sowohl in Längsrichtung als auch in Querrichtung des Formrohres mittels jeweils eines Pressstempels verpresst wird.

Der Grundgedanke der Erfindung besteht darin, den zu verpressenden Laib schonender zu behandeln, und hierfür nach dem Vorwärtsschieben eines Pressstempels und Verpressen des Laibes durch den Pressstempel (Presshub) diesen nicht in der erreichten, vorgeschobenen Stellung zu belassen, sondern danach - entweder unmittelbar danach oder nachdem andere Vorgänge durchgeführt wurden - den Pressstempel wieder etwas zurückzuziehen und dadurch den Laib von der zuvor aufgebrachten Presskraft wieder etwas zu entlasten (Entlastungshub).

Dadurch wird die zuvor erreichte Verformung zwar teilweise wieder aufgehoben, jedoch gibt dies dem Material des Laibes die Gelegenheit, eine innere Struktur mit möglichst geringen inneren Spannungen zu suchen und einzunehmen, sodass die benötigte Gesamt-Umformung des Laibes mit einer geringeren Veränderung der inneren Struktur des Laibes erreicht werden kann als entweder mit einem Verpressen nur in einer Pressrichtung und/oder einem Verpressen nur mit Presshub und ohne Entlastungshub, also Rückwärtshub, des betreffenden Pressstempels.

Ferner führt das Reduzieren der Presskraft in einer 1. Pressrichtung zu einer geringeren Haftreibung des Laibes am Formrohr und damit einem geringeren Kraftaufwand beim anschließenden Verpressen in der 2. Pressrichtung. In diesem Zusammenhang muss klargestellt werden, dass selbst bei einem stillstehenden Pressstempel durch einen anderen Pressstempel, der einen Pressehub vollzieht, die an den anderen Pressstempeln anliegende Presskraft ansteigt oder diese anderen Pressstempel zurückgedrückt werden, da der in dem Laib ansteigende Druck in alle Richtungen wirkt.

Es wird also in einem ersten Pressschritt in einer ersten Pressrichtung mit dem entsprechenden ersten Pressstempel - ab Anliegen dieses Pressstempel an dem Laib - ein Verpressen des Laibes durch einen Presshub bis zu einem ersten Hub-Zielwert für diese Pressrichtung durchgeführt.

Ferner wird in einem zweiten Pressschritt in einer zweiten Pressrichtung mit dem entsprechenden zweiten Pressstempel ebenfalls ein Verpressen durch eine Presshub bis zu einem ersten Hub-Zielwert für diese Pressrichtung durchgeführt, wobei auch in diesem Fall das Verpressen und der Presshub mit dem Anlegen, also Kontaktieren des Pressstempels an dem Laib, beginnt, falls dies noch nicht schon gegeben war.

Bei mindestens einem der beiden Pressschritte erfolgt unmittelbar nach dem Presshub oder zeitversetzt hierzu, insbesondere nachdem eine Mindest-Haltezeit verstrichen ist und/oder andere Maßnahmen am Laib durchgeführt wurden, ein Entlastungshub durch Zurückziehen des entsprechenden Pressstempels entgegen seiner Pressrichtung.

Vorzugsweise wird der Entlastungshub bei jedem der beiden Pressschritte durchgeführt.

Sowohl jeder der beiden Vorwärtshübe in der entsprechenden Pressrichtung als auch jeder der Entlastungshübe kann mehrfach hintereinander durchgeführt werden, wobei dann vor dem nächsten Presshub der entsprechende Stempel bereits an dem Laib anliegt - entweder unmittelbar mehrfach hintereinander, oder indem dazwischen ein Verpressen oder auch Entlasten in der anderen Querrichtung stattgefunden hat.

Jeder der Hübe - sowohl Press-Hub als auch Entlastungs-Hub - wird also in mehreren, insbesondere direkt aufeinanderfolgenden, Stufen jeweils bis zu Teil-Zielwerten durchgeführt.

Am Ende des Verpressens nimmt jeder der Pressstempel einen End-Zielwert hinsichtlich des Steuerungs-Parameters ein, anhand dessen er gesteuert wird. Dabei kann der End-Zielwert durchaus niedriger liegen als einer der vorher in der gleichen Pressrichtung vorgegebenen und erreichten Hub-Zielwerte, und der End-Zielwert kann auch am Ende eines Entlastungshubes erreicht werden nicht nur am Ende eines Presshubes:
Ein Pressstempel kann kraftgesteuert sein, sodass der Zielwert am Ende der Verpressung eine bestimmte Presskraft oder ein bestimmter Druck ist, mit der der Pressstempel beaufschlagt ist und gegen den Laib drückt.

Der End-Zielwert ist bei einem kraftgesteuerten Stempel insbesondere die Messkraft. bei der die Volumenermittlung durchgeführt werden soll.

Der Pressstempel kann auch positionsgesteuert sein, sodass der Zielwert eine bestimmte Position des Pressstempels in seiner Pressrichtung ist, insbesondere relativ zum Formrohr.

Es können jedoch nicht alle vorhandenen Pressstempel positionsgesteuert sein, da die einzelnen Laibe unterschiedliches Volumen besitzen, jedoch bei ausschließlich positionsgesteuerten Pressstempeln der Endzustand nach dem Verpressen ein immer gleiches Volumen haben müsste.

Da der Laib abhängig von seinen Materialanteilen jedoch häufig nur gering oder fast gar nicht komprimierbar ist, ist dies nicht möglich.

Wären dagegen alle drei Pressstempel kraftgesteuert, würden die Laibe im verpressten Zustand unterschiedliche Durchmesser in beiden Querrichtung, aufweisen, was bereits eine zusätzliche Schwierigkeit beim Herstellen gewichtsgenauer Scheiben darstellt, da dann für die Steuerung der Scheibendicke zunächst einmal die bei jedem Laib dann unterschiedlichen Durchmesser in beiden Querrichtungen des inneren Freiraumes des Formrohres im verpressten Zustand ermittelt werden müssen in Abhängigkeit von den Ist-Positionen der einzelnen kraftgesteuerten Pressstempel.

In der Regel bewegt sich der Längs-Pressstempel im Inneren des aus mindestens einem Quer-Pressstempel und den restlichen Umfangswänden der Formrohr-Rinne gebildeten Formrohres.

Vorzugsweise besitzt der Quer-Pressstempel und ebenso die Formrohr-Rinne, in die er hineinpasst, eine fixe Breite, selbst wenn diese fixe Breite auch erst durch Gegeneinanderfahren der Seitenwände der Formrohr-Rinne nach dem Einlegen eines Laibes von einem weiter beabstandeten Einlege-Abstand auf diese geringere fixe Breite erreicht wird.

Bei der einfachsten Vorgehensweise wird der Quer-Pressstempel bis auf eine vorgegebene Ziel-Position als End-Zielwert in dieser Querrichtung vorwärtsgeschoben, sodass sich ein Querschnitt des Formrohres ergibt, der der Kontaktfläche des Längs-Pressstempels mit fixer Form und Größe seiner Kontaktfläche entspricht.

Dann ist der Steuerungsparameter für den Längs-Pressstempel die Presskraft.

Häufig ist der Steuerungsparameter für den Quer-Pressstempel ebenfalls die Presskraft, und dann muss der Längs-Pressstempel ein in der 1. Quer-Pressrichtung, in der sich der Quer-Pressstempel bewegt, eine variable Erstreckung aufweisen, beispielsweise indem er aus zwei ineinandergreifenden Teilen besteht, die insbesondere gegeneinander vorgespannt sind in Richtung Auseinanderdrücken der beiden Teile, um den inneren freien Querschnitt des Formrohres auszufüllen.

Vorzugsweise beträgt der Hub-Zielwertes des Entlastungshubes ohnehin nur maximal 30%, besser maximal 20%, besser maximal 10% des Hub-Zielwertes des vorangegangenen Presshubes, und dient vor allem dazu, die Haftreibung zwischen dem durch den Presshub verpressten Laib und dem Formrohr zu verringern, bevor im nächsten Pressschritt das Verpressen in einer anderen Pressrichtung durchgeführt wird.

In absoluten Werten beträgt der Entlastunghub in Quer-Pressrichtung zwischen 0.5 mm und 6 mm, besser zwischen 2 mm und 5 mm und oder in Längs-Pressrichtung zwischen 2 mm und 20 mm, besser zwischen 3 mm und 15 mm, besser zwischen 4 mm und 10 mm.

Hinsichtlich der zeitlichen Relation können die einzelnen Hübe, insbesondere einzelnen Pressschritte, nacheinander durchgeführt werden, oder auch teilweise oder vollständig zeitlich überlappend durchgeführt werden. Insbesondere kann während des Zurückziehens des einen Pressstempels der andere Pressstempel bereits vorwärts geschoben werden, also Verpressen.

Insbesondere wenn die einzelnen Pressschritte nacheinander durchgeführt werden, kann entweder die Abfolge aus erstem und zweitem Pressschritt mehrfach hintereinander durchgeführt werden, oder auch nur der erste oder nur der zweite Pressschritt unmittelbar oder nicht unmittelbar mehrfach hintereinander durchgeführt werden wobei dazwischen nicht zwingend jedes Mal ein Entlastungs-Hub erfolgen muss.

Vorzugsweise wird mit dem Quer-Verpressen begonnen, so dass also die 1. Pressrichtung die Querrichtung ist, in der der Quer-Pressstempel bewegbar ist.

Bei diesem Quer-Verpressen muss der Laib mit seinen Stirnseiten noch nicht unbedingt zwischen dem Längs-Pressstempel einerseits und einem gegenüberliegenden Anschlag andererseits dicht aufgenommen sein.

Wenn jedoch in dem Laib eine in dessen Längsrichtung verlaufende Tragstruktur vorhanden ist, die nicht oder wenig elastisch ist, insbesondere ein Knochen oder ein Knochen-Strang, wie bei einem Kotelett-Strang, wird vor dem Quer-Verpressen der Laib in Längsrichtung an den Stirnseiten an Anschläge angelegt, vorzugsweise jedoch nur kraftfrei dazwischen dicht anliegend aufgenommen oder höchstens mit einer sehr geringen Längs-Presskraft, die insbesondere höchstens einem Zehntel der Längs-Messkraft entspricht.

Ein häufig angewandter Ablauf des Verpressens umfasst folgende Schritte S1 bis mindestens S4:
S1) in einem 1. Pressschritt wird der Quer-Pressstempel in einer 1. Quer-Pressrichtung gegen den Laib vorwärts gefahren und ab Anlage am Laib um einen Quer-Presshub zum Verpressen weiter gefahren, bis ein 1. Hub-Zielwert oder der End-Zielwert des Quer-Steuerungs-Parameters erreicht ist,
S2) nach diesem Quer-Presshub wird der Quer-Pressstempel (5) zurückgezogen um einen Quer-Entlastungshub, dessen Strecke vorzugsweise geringer ist als der Betrag der Strecke des Quer-Presshubes, insbesondere um 0,5 mm bis 6 mm,
S3) danach in einem 2. Pressschritt der Längs-Pressstempel (4) in Längsrichtung gegen den Laib vorwärts gefahren und ab Anlage am Laib um einen Längs-Presshub zum Verpressen weiter gefahren wird, bis ein 1. Hub-Zielwert oder der End-Zielwert des Längs-Steuerungs-Parameters erreicht ist,
S4) nach diesem Längs-Presshub der Längs-Pressstempel zurückgezogen wird um einen Längs-Entlastungshub (-L) von insbesondere 6 mm bis 20 mm,
   - diese beiden Pressschritte oder auch nur der 1. Pressschritt gegebenenfalls mit erhöhten Teil-Zielwerten wiederholt werden, wobei insbesondere
S5) der Längs-Pressstempel in Längsrichtung gegen den Laib vorwärts gefahren wird, bis insbesondere als End-Zielwert des Längs-Steuerungs-Parameters die Messkraft erreicht ist, während der Hub-Zielwert im Schritt S3 niedriger lag als die Messkraft.

Wenn beide Pressstempel unter ihrer jeweiligen Messkraft für diese Pressrichtung stillstehen, wird aus den Positionen der Stempel in ihrer jeweiligen Pressrichtung Länge und Querschnitt des verpressten Laibes automatisch ermittelt und von der Steuerung für die automatische Steuerung des Aufschneide-Vorganges verwendet.

Dabei kann nach dem Schritt S4 und insbesondere vor dem Pressschritt, dessen Hub-Zielwert in Längsrichtung die Messkraft ist, optional zunächst in Querrichtung ein Entlastungshub und anschließend optional ein erneuter Presshub ebenfalls in Querrichtung durchgeführt werden, wobei der Betrag dieser beiden Hübe vorzugsweise gleich ist oder die Beträge nicht mehr als um 20 %, besser nicht mehr als 15 %, besser nicht mehr als 10 % voneinander abweichen, ausgehend vom geringeren der beiden Beträge.

Zusammenfassend wird also nach mindestens einem Presshub, unabhängig davon, in welche Richtung er stattfand, in der Gegenrichtung ein Entlastungshub durchgeführt.

Ein Parameter zur Bestimmung der Zielwerte könnte die Elastizität oder Härte des Fleisch-Laibes sein, die wiederum vom Frostungsgrad des Laibes abhängt, der einerseits bestimmt wird durch die Temperatur des Laibes auf seine Außenseite, vor allem aber dadurch, wie dick die gefrorene äußere Schicht des Laibes ist.

Je höher die Frostung ist, umso höher müssen die Presskräfte gewählt werden, um den Laib verformen zu können.

Im Normalfall ist die gefrorene Außenschicht des Fleisch-Laibes nicht dicker als 2-10 mm. Dann wird bei einem Fleisch-Laib aus einem Schwein oder einem Rind
- der Längs-Pressstempel mit einer Kraft zwischen 1000 N und 4000 N, besser zwischen 2000 N und 3000 N, beaufschlagt
   und/oder
- der Quer-Pressstempel dagegen mit einer Kraft von 10.000 N bis 30.000 N, besser zwischen 15.000 N und 25.000 N beaufschlagt.

Damit sich die Scheiben nach dem Abtrennen vom Laib nicht mehr stark zurück verformen, kann es vorteilhaft sein, beim Vorwärtsschieben eines Pressstempels, insbesondere im letzten Pressschritt der jeweiligen Pressrichtung, den End-Zielwert seines Steuerungs-Parameters zunächst durch den Hub-Zielwert zu überschreiten, also den Laib zu überpressen, und anschließend durch einen Entlastungshub auf den End-Zielwert zurückzugehen.

Ein solches Überpressen findet bevorzugt bei dem letzten Pressschritt vor dem Beenden des Verpressens statt.

Auch eine ausreichende Verweilzeit, insbesondere in dem überpressten Zustand, aber auch zwischen jedem Presshub und dem nachfolgenden Entlastungshub, insbesondere von mindestens 0,1 s, besser mindestens 0.3 s, jedoch höchstens 2,0 s, besser höchstens 1,5 s, besser höchstens 1,0 s, kann vorteilhaft sein.

Allerdings sollte dieses Überpressen maximal so stark durchgeführt werden, dass in der jeweiligen Pressrichtung die Größe des Fleisch-Laibes um nicht mehr als 20%, besser nicht mehr als 10%, unter die End-Abmessung bei anliegender Messkraft liegt.

Vor allem wenn der Längs-Pressstempel derjenige Pressstempel ist, der zwischen die anderen Formteile hinein einfährt und der Längs-Pressstempel keine glatte, durchgehende Pressfläche besitzt, da er aus zwei oder gar mehr Bauteilen in einer der Erstreckungsrichtungen seiner Kontaktfläche besteht, sollte während des Presshubes des Quer-Pressstempels der Längs-Pressstempel nicht am Laib anliegen.

Dadurch wird verhindert, dass Material des Laibes in den sich während des Quer-Verpressens verringernden Abstand zwischen den zwei zueinander beweglichen Teilen des Längs-Pressstempels eindringt.

Vor allem bei einem im unverpressten Zustand sehr schlanken Laib und/oder einem Laib mit hoher Gleichmäßigkeit seines Querschnittes über seine Länge ist es auch möglich, mit einem Längs-Pressstempel mit durchgehend geschlossener Pressfläche zu arbeiten, deren Form und Größe dem Ziel-Querschnitt des Formrohres nach dem Verpressen entspricht, somit jedoch zu Beginn des Quer-Verpressens noch ein Querabstand zwischen dem LängsPressstempel und dem Quer-Pressstempel in Querrichtung besteht.

Dies kann insbesondere dann hingenommen werden, wenn mit dem QuerVerpressen als ersten Pressschritt begonnen wird und dadurch bereits nach dem ersten Pressschritt dieser Abstand zwischen Längs-Pressstempel und Quer-Pressstempel so gering ist, dass das Hindurchtreten von Material des Laibes bei dem anschließenden ersten Längs-Verpressen nicht mehr zu befürchten steht.

Um den gesamten Umformvorgang nicht nur auf zwei, sondern sogar auf drei Pressrichtungen zu verteilen, ist es ferner möglich, auch in der zweiten Querrichtung zu Verpressen.

Zu diesem Zweck besteht die Formrohr-Rinne, in die der Quer-Pressstempel als Teil der Wandung des gesamten Formrohres in der 1. Quer-Pressrichtung eingeschoben wird, nicht aus einem einstückigen U- oder C-Profil, sondern einer der frei endenden Seitenwände dieses U- oder C-Profils ist in Richtung auf die gegenüberliegende Seitenwand hin verstellbar und damit als Quer-Begrenzungsstempel ausgebildet.

Sofern dies beabsichtigt ist, wird ein solcher Quer-Begrenzungsstempel, der nur mit einer seiner Schmalseiten an dem gewinkelten Formrohr-Teil entlanggleitet, vorzugsweise positionsgesteuert auf eine bestimmte Breite der Formrohr-Rinne vorwärts gefahren, wodurch der im Querschnitt meist ovale unverpresste Laib möglicherweise noch nicht einmal in seinem Querschnitt verpresst, sondern nur gedreht wird, unabhängig davon hierfür die Bezeichnung Quer-Verpressung jedoch beibehalten wird.

Diese Soll-Breite der Formrohr-Rinne entspricht dann der Breite des Quer-Pressstempels als auch der Breite des Längs-Pressstempels.

Würde diese als Quer-Begrenzungsstempel ausgeführte Seitenwand der Formrohr-Rinne dagegen kraftgesteuert sein, müsste der Quer-Pressstempel in seiner Breite variabel ausgestaltet werden, was den Nachteil einer nicht durchgehenden und damit nicht fugenfreien, glatten Pressfläche nach sich zieht, ganz abgesehen vom erhöhten konstruktiven Aufwand für einen solchen mehrteiligen Pressstempel.

Für das Aufschneiden des Laibes wird wie bekannt der im Formrohr gegen einen Längsanschlag verpresste Laib danach in Längsrichtung mittels des Längs-Pressstempels vorwärts geschoben über das vordere Ende, das Schneid-Ende, des Formrohres hinaus um eine vorgegebene Dicke, die der Dicke der herzustellenden Scheibe entspricht, vorzugsweise bis zur Anlage an einer in ihrer Längsposition einstellbaren Anschlagplatte. Der Längsanschlag kann die an die Stirnfläche des Formrohres herangefahrene Anschlagplatte oder eine separate, in den Querschnitt des Formrohres einfahrbare, zwischen Platte sein.

Dies wird in der Regel wiederholt, bis der gesamte Laib aufgeschnitten ist.

Dabei wird der Längspressstempel mit einer Vorschub-Kraft beaufschlagt, die vorzugsweise der Messkraft entspricht oder höchstens 10 % von dieser abweicht.

Die erfindungsgemäße Maschine umfasst - wie schon zum Verfahren dargelegt - bereits gemäß dem Stand der Technik ein an beiden Stirnseiten offenes Formrohr, in dem ein Längs-Pressstempel in Längsrichtung des Formrohres verschiebbar geführt ist, , sowie einen Quer-Pressstempel, der einen Teil der Wandung des Formrohres darstellt, beispielsweise indem der Rest des Formrohres eine Formrohr-Rinne bildet, in deren offene Seite der Quer-Pressstempel passgenau einfahrbar ist.

Der freie innere Querschnitt des Formrohres ist vorzugsweise nicht rund, sondern weist zwei einander gegenüberliegende, parallel zueinander verlaufende Seitenwände auf und ist insbesondere rechteckig oder parallelogrammförmig, jeweils mit stark gerundeten Ecken.

Vorzugsweise besitzt der Längs-Pressstempel eine variable Erstreckung seiner Pressfläche in der Quer-Pressrichtung, in der sich der Quer-Pressstempel verfahren lässt und falls die beiden parallel zueinander verlaufenden Seitenwände der Formrohr-Rinne in ihrem gegenseitigen Abstand einstellbar sind, so müssen auch der Quer-Pressstempel und der Längs-Pressstempel einen quer zu seiner Pressrichtung und quer zur Längsrichtung variable Größe besitzen, um sich an den Abstand zwischen den Wänden der Formrohrrinne anpassen zu können.

Die Maschine kann auch mehrere solcher Formrohre, die mit ihren Längsrichtungen parallel nebeneinander angeordnet sind, umfassen, deren Pressstempel und Pressverfahren dann vorzugsweise unabhängig voneinander steuerbar sind.

Insbesondere benötigt die Maschine einen Axial-Anschlag für den Laib, gegen welchen der Längs-Pressstempel den Laib verpressen kann, sowie eine Schneideinheit, vorzugsweise ein Messer, welches zum Abtrennen einer Scheibe in axialer Richtung vor dem vorderen Schneidende des Formrohres in Querrichtung zu dessen Längsrichtung bewegbar ist.

Der Axial-Anschlag verschließt vorzugsweise den Querschnitt des Formrohres vollständig, vorzugsweise bereits zu Beginn des Verpressens, und ist entweder unmittelbar an der schneidseitigen, vorderen Stirnfläche des Formrohres angeordnet, oder von dieser etwas zurückversetzt quer in das Formrohr einschiebbar als sogenannte Zwischenplatte.

Als Anschlagelement unmittelbar an der endseitigen Stirnfläche kann auch direkt diejenige Anschlagplatte verwendet werden, die beim anschließenden Aufschneiden des Laibes hinsichtlich ihrer Längs-Position zum Messer und/oder zum Formrohr die Dicke der abzutrennenden Scheibe vorgibt.

Vor allem aber umfasst eine solche gattungsgemäße Maschine auch eine Steuerung, die alle beweglichen Teile der Maschine steuert.

Erfindungsgemäß ist die Steuerung der Maschine in der Lage, die beweglichen Teile der Maschine gemäß dem zuvor beschriebenen Verfahren zu steuern.

Hierfür umfasst die Maschine auch Sensoren, die Parameter messen, die für die Steuerung des Verfahrens von Bedeutung sind, beispielsweise Drucksensoren, Kraftsensoren oder Positionssensoren an den Pressstempeln, Drucksensoren oder Kraftsensoren in den Innenflächen des Formrohres und/oder an dem Längsanschlag.

### c) Ausführungsbeispiele

Ausführungsformen gemäß der Erfindung sind im Folgenden beispielhaft näher beschrieben. Es zeigen:
- **Figur 1a:**: ein Formrohr in der Seitenansicht im Schnitt,
- **Figur 1b:**: das Formrohr geschnitten entlang der Linie B - B der Figur 1a,
- **Figur 1c:**: das Formrohr geschnitten entlang der Linie C - C der Figur 1a,
- **Figur 2a-c:**: eine Maschine zum Verpressen und Aufschneiden von Laiben in der Seitenansicht im Teilschnitt in unterschiedlichen Funktionsstellungen.

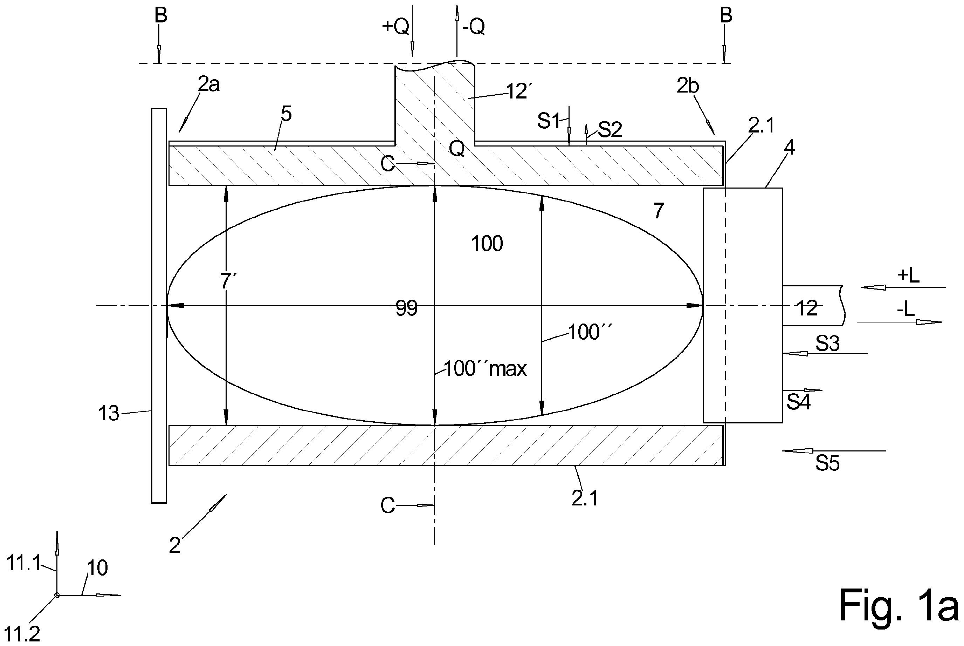

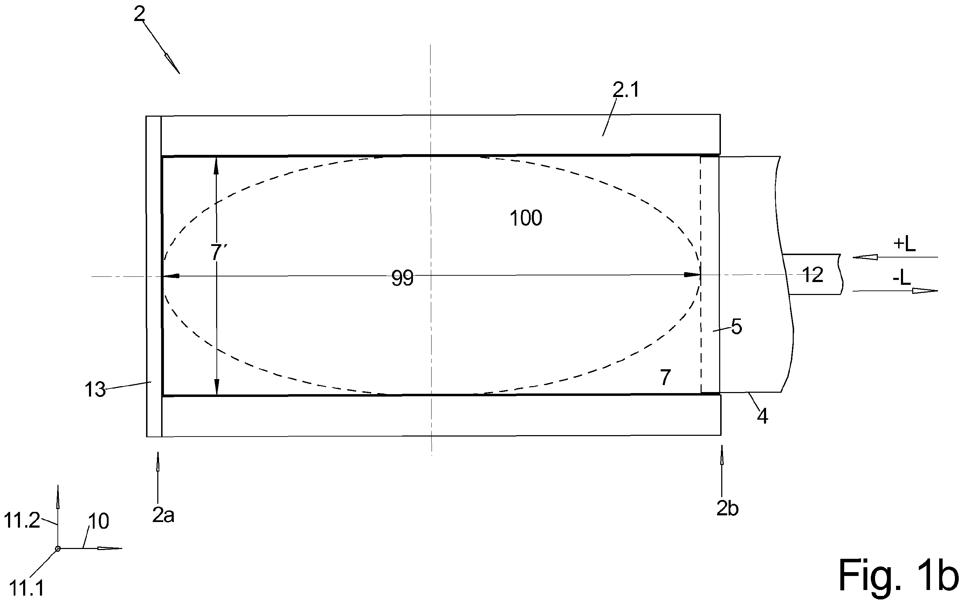

Die **Figuren 1a - 1c** zeigen das Formrohr 2 in Prinzip-Darstellung, wobei in den **Figuren 1a****, b** der zu verpressende Laib 100 sich noch in seinem Ausgangszustand befindet, in der er eine etwa länglich- eiförmig ist oder auch die Form eines American Football besitzt, mit einem Querschnitt 100", der sich in Längsrichtung 10, der Richtung seiner größten Länge 99, ändert und etwa im mittleren Bereich den maximalen Querschnitt 100"max besitzt.

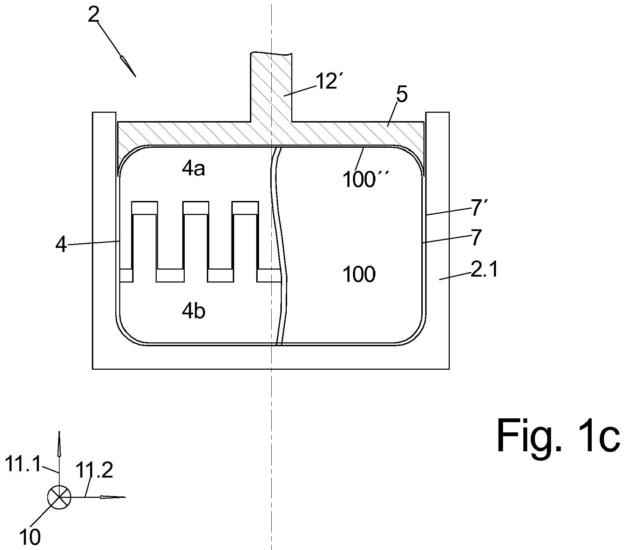

Die Formrohr-Rinne 2 besteht-wie die geschnittene Ansicht in Längsrichtung 10 gemäß **Figur 1c** zeigt - aus einer in diesem Querschnitt U-förmigen Formrohr-Rinne 2.1, in die von der offenen Seite her, in der Regel von oben, passgenau ein Quer-Pressstempel 5 eintaucht, die gemeinsam das stirnseitig vorne und hinten offene Formrohr 2 bilden.

Wie die **Figuren 1a****, b** zeigen, wird zum Verpressen des Laibes 100 das vordere Ende, das Schneid-Ende 2a, des Formrohres 2, von einem Längsanschlag, in diesem Fall beispielsweise der später noch erläuterten Anschlagplatte 13, verschlossen, während in das hintere Ende, das Belade-Ende 2b, des inneren Freiraumes 7 ein Längs-Pressstempel 4 eintaucht und in Längsrichtung 10 verfahrbar ist, um den Laib 100 in Längsrichtung 10 zu Verpressen.

Wie **Figur 1c** erkennen lässt, verlaufen die Innenflächen der Seitenwände der U-förmigen Formrohr-Rinne 2.1 parallel zueinander, und in einem nicht veränderbaren Abstand, sodass der Quer-Pressstempel 5 in Richtung der Breite der Öffnung der Formrohr-Rinne 2.1, der zweiten Querrichtung 11.2, eine fixe Breite besitzen kann, und ebenso in der Länge 10 eine fixe Länge besitzen kann, nämlich z.B. entsprechend der Länge der Formrohr-Rinne 2.1.

Denn wie **Figur 1b** zeigt, verfährt der Längs-Pressstempel 4 - der sich meist an dem vorderen Ende einer angedeuteten Kolbenstange 12 einer nicht dargestellten Arbeitszylinder-Einheit befindet - zwischen dem Quer-Pressstempel 5 und mit einer Seite anliegend an der in der **Figur 1b** nach unten weisenden Pressfläche des Quer-Pressstempels 5 und dem Boden der Formrohr-Rinne 2.1.

Damit er unabhängig von der Position des Quer-Pressstempels 5 in Quer-Pressrichtung Q, der 1. Querrichtung 11.1, den freien Querschnitt 7' zwischen der Formrohr-Rinne 2.1 und dem Quer-Pressstempel 5 immer vollständig ausfüllt, besteht er - wie in **Figur 1c****, linke Hälfte** - aus zwei Teilen 4a, 4b, die auf der einander zugewandten Seite abwechselnd Zinken und Ausnehmungen aufweisen und damit ineinander eintauchen und dadurch der Quer-Pressstempel 5 seine Erstreckung in diese Querrichtung 11.1 verändern kann, was automatisch geschieht, da die beiden Teile 4a, b mittels Federn in die voneinander wegweisende Richtung vorgespannt sind.

In den **Figuren 1a****, b** befindet sich der Laib 100 noch in seinem Ausgangszustand und liegt z.B. in Längsrichtung 10 einerseits an der Anschlagplatte 13 und andererseits am Längs-Pressstempel 12 kraftfrei an und ebenso in Querrichtung 11.1 einerseits am Boden der Formrohr-Rinne 2.1 und andererseits am Quer-Pressstempel 5. Der Quer-Pressstempel 5 ist in aller Regel ebenfalls am vorderen Ende einer Kolbenstange 12' einer nicht dargestellten Arbeitszylinder-Einheit angeordnet und von dieser kraftbeaufschlagbar analog zum Längs-Pressstempel 4.

In der Regel stimmt die Längsrichtung 10 des im Ausgangszustand in das Formrohr 2 eingelegten Laibes 100 mit der Längsrichtung 10 des Formrohres 2 - der Längs-Pressrichtung L des Längs-Pressstempels 4 - überein, wovon in der vorliegenden Anmeldung ausgegangen wird.

In diesem Zustand sind die vorhandenen Hohlräume im inneren Freiraum 7 des Formrohres 2 um den Laib 100 herum zu erkennen, die der noch etwa länglich-eiförmige Laib 100 noch nicht ausfüllt.

Durch weiteres Vorwärtsfahren aus diesem Zustand des Längs-Pressstempels 4 in Längs-Pressrichtung L in Richtung Schneid-Ende 2a des Formrohres 2 und / oder des Quer-Pressstempels 5 in der Quer-Pressrichtung Q, der Querrichtung 11.1, wird der Laib 100 immer mehr in eine Form gebracht, die den inneren verbleibenden Freiraum 7 im Formrohr 2 zwischen dem Längs-Anschlag und dem Längs-Pressstempel 4 vollständig ausfüllt. Wie in **Figur 1c** im endgültig verpressten Zustand zu erkennen besitzt der Leib 100 dann einen etwa rechteckigen Querschnitt mit gerundeten Ecken entsprechend der Formgebung des Querschnitts des inneren Freiraumes 7, und diesen gleichmäßig über die gesamte Länge des verpressten Laibes 100.

Da in aller Regel sowohl längsverpresst als auch querverpresst wird, besitzt der verpresste Laib 100 im endgültig verpressten Zustand eine geringere Länge in Längsrichtung 10 und auch einen anders geformten Querschnitt 100", auch insbesondere eine geringere maximale Querschnittsfläche 100"max, als im unverpressten Ausgangszustand.

Erfindungsgemäß wird das Längs-Verpressen und Quer-Verpressen nicht nur durch Presshübe in der jeweiligen Pressrichtung +Q und +L vollzogen, sondern auch durch dazwischen erfolgende Entlastungshübe in der jeweiligen Pressrichtung, also -L, -Q.

In **Figur 1a** ist dabei ein typischer Ablauf des Pressvorganges ausgehend von den dargestellten unverpressten Zustand des Laibes 100 bis in den endverpressten Zustand - in dem der Laib 100 den gesamten verbleibenden inneren Freiraum 7 im Formrohr 2 ausfüllt - dargestellt.

Vorzugsweise befindet sich bereits im Ausgangszustand, also in dem wie oben beschrieben der noch unverpresste Laib 100 an den entsprechenden Teilen des Formrohres 2 sowie der Anschlagplatte 13 und dem Längs-Pressstempel anliegt, der Längs-Pressstempel 4 bereits im Formrohr, also zwischen dem Quer-Pressstempel 5 und der Formrohr-Rinne 2.1.

Nach Anlegen der Pressstempel 4, 5 am Laib 100 wird das Verpressen wie folgt durchgeführt:
Zunächst wird in einem ersten Schritt S1 der Quer-Pressstempel 5 in einem Quer-Presshub +Q, also in Richtung Boden der Formrohr-Rinne 2.1, bewegt und dadurch der Laib 100 in dieser 1. Querrichtung 11.1 zusammengedrückt.

Anschließend wird in einem Schritt S2 mit dem Quer-Pressstempel 5 ein Entlastungshub -Q in der umgekehrten Richtung durchgeführt um eine Strecke, die geringer ist als der Betrag des Presshubes +Q, und vorzugsweise 2 - 6 mm beträgt, vorzugsweise um die Haftreibung zwischen dem Laib 100 und den Umfangswänden der Form Rohr-Rinne 2 zu reduzieren.

Anschließend oder gleichzeitig, d.h. eventuell bereits während des Quer-Entlastungshubes -Q, ggfs. sogar bereits während des Quer-Presshubes +Q, wird begonnen, in einem dritten Schritt S3 den Längs-Pressstempel 4 mit einem Längs-Presshub +L in Pressrichtung 10 weiter vorwärts zu fahren in Richtung des geschlossenen Schneid-Endes 2a des Formrohres 2 und dadurch den Laib 100 in Längsrichtung 10 zu stauchen.

Beispielsweise kann der Quer-Entlastungshub -Q in mehreren Stufen mit mehreren Teil-Zielwerten vollzogen werden, und nach jeder Stufe ein neuer Teil des ebenfalls stufenweise vollzogenen Längs-Presshubes +L durchgeführt werden.

Anschließend wird als Schritt S4 vom Längs-Pressstempel 4 ein Längs-Entlastungshub -L in der Gegenrichtung vollzogen, dessen Strecke nur einen Teil des Betrages des vorangegangenen Presshubes +L in diese Richtung beträgt, insbesondere 6 mm bis 20mm. Dieser Längs-Entlastungshub -L wird vorzugsweise erst vollzogen, nachdem sowohl der Quer-Vorwärtsbub +Q, insbesondere auch der Quer-Entlastungshub -Q, beendet ist.

In Einzelfällen, also wenn eine starke Umformung des Laibes 100 nötig ist, kann dieser Ablauf und/oder nur das Quer-Verpressen +Q und/oder Quer-Entlasten -Q, ein weitere Mal durchgeführt werden.

In der Regel sind sowohl der Quer-Pressstempel 5 als auch der Längs-Pressstempel 4 kraftgesteuert, d.h. über die auf den jeweiligen Pressstempel aufgebrachte Kraft, die im vollständig verpressten Zustand des Laibes einen bestimmten End-Zielwert aufweisen soll.

Dieser End-Zielwert ist beispielsweise die sogenannte Messkraft, die - getrennt für Längs-Pressstempel 4 und Quer-Pressstempel 5 - vorgegeben ist, und die an den Pressstempeln 4 bzw. 5 anliegen soll, wenn die Größe des - dann über die Länge einheitlichen - Querschnittes 100" des inneren Freiraumes 7' des Formrohres 2 und damit des verpressten Laibes 100 ermittelt wird als auch die Länge 99 in Längsrichtung 10.

Dies erfolgt insbesondere durch Bestimmung der Positionen der Pressstempel 4, 5 in ihrer jeweiligen Pressrichtung Q, L gegenüber der Formrohr-Rinne 2.1 bzw. dem Längsanschlag in Form z.B. der Anschlagplatte 13 am Schneid-Ende 2a des Formrohres 2, beispielsweise durch nicht dargestellte Positionssensoren, die in den nicht dargestellten, die Pressstempel 4, 5 beaufschlagenden, Arbeitszylinder-Einheiten verbaut sein können.

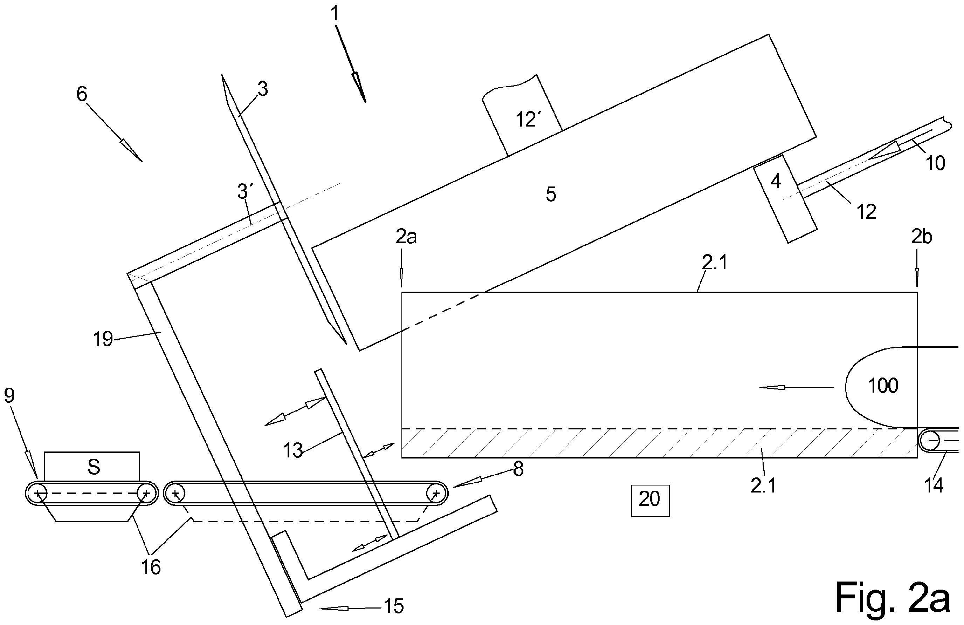

In der Regel ist der Längs-Pressstempel 4 bei seinem ersten Längs-Presshub +L noch nicht mit dem End-Zielwert beaufschlagt, sondern nur mit einem Hub-Zielwert, sodass in einem anschließenden mindestens fünften Schritt S5 nunmehr der Längs-Pressstempel erst mit dem End-Zielwert, z.B. der Messkraft, beaufschlagt wird und - wenn auch der Quer-Pressstempel 5 seine Messkraft erreicht hat - die Bestimmung von Querschnitt und Länge des Laibes 100 durchgeführt wird, woraus die Steuerung 20 der Maschine - die in den nachfolgenden **Figuren 2a** **- c** dargestellt ist - die Anzahl der daraus gewinnbaren Scheiben 101 mit einem vorgegebenen Gewicht ermittelt.

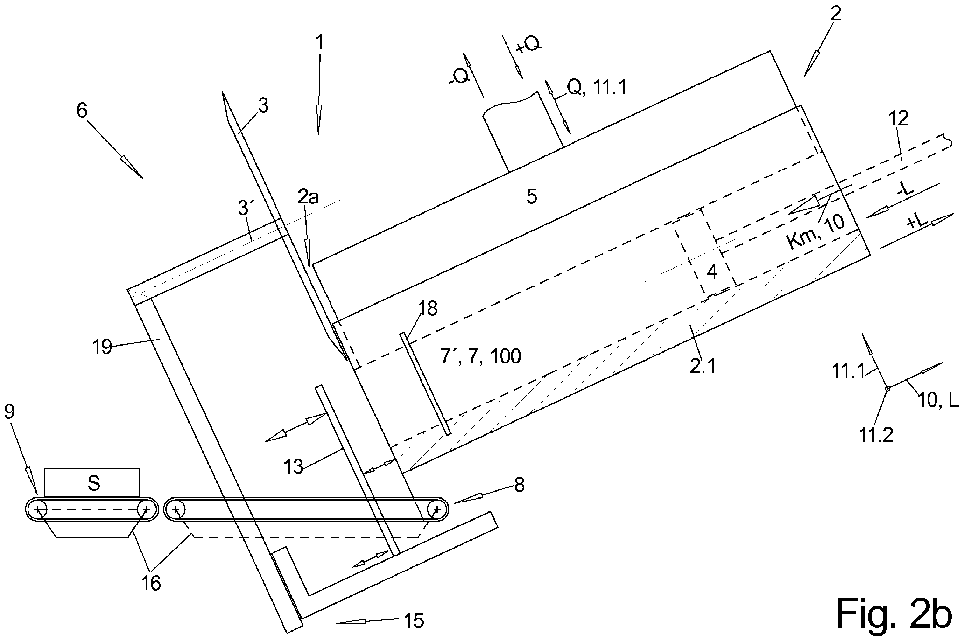

In den **Figuren 2a****, b** ist - wie am Besten in **Figur 2b** zu erkennen - die gesamte Schneidemaschine 1 dargestellt, die außer dem Formrohr 2 und den Pressstempeln 4, 5 eine Schneideinheit 6 umfasst zum Abtrennen von Scheiben 101 von dem verpressten Laib 100.

Hinsichtlich des Formrohres 2 ist zu erkennen, dass das Formrohr 2 in **Figur 2b** schräg nach unten abwärts gerichtet angeordnet ist, und zusätzlich nahe des Schneid-Endes 2a des Formrohres 2 eine Zwischenplatte 18 so im Formrohr 2 eingebracht werden kann, dass sie dessen gesamten freien Querschnitt 7' des inneren Freiraumes 7 verschließt. Dies dient dazu, um beim Verpressen des Laibes 100 diesen nicht gegen die an das Formrohr 2 herangefahrene Anschlagplatte13 verpressen zu müssen, sondern gegenüber dieser stabiler im Formrohr 2 selbst gelagerten Zwischenplatte 18.

Da deren Position in Längsrichtung 10 bekannt ist, kann dennoch aus den Positionen der Pressstempel 4, 5 in deren Pressrichtungen Q, L im verpressten Zustand auf die Länge 99 des Laibes 100 in Längsrichtung 10 und dessen Querschnittsfläche 100' und Gestaltung der Querschnittsfläche in den Querrichtungen 11.1, 11.2, die im rechten Winkel zueinander und lotrecht zur Längsrichtung 10 stehen, geschlossen werden.

Wie **Figur 2a** zeigt, ist zum Erleichtern des Beladens sowie für andere Zwecke die Formrohr-Rinne 2.1 herabklappbar in eine horizontale Lage um eine in ihrem vorderen Bereich, hier der Unterkante am Schneid-Ende 2a des Formrohres 2 gelegene, in der zweiten Querrichtung 11.2 verlaufende Schwenkachse, während Quer-Pressstempel 5 und Längs-Pressstempel 4 in der ursprünglichen Lage verbleiben.

In dieser herabgeklappten Anordnung der Formrohr-Rinne 2.1 kann - etwa mittels des dargestellten Zuförderers 14 - ein neuer Laib 100 vom hinteren, beladeseitigen Ende 2b aus in die Formrohr-Rinne 2.1 eingeschoben werden.

Anschließend wird die Formrohr-Rinne 2.1 mit dem Laib 100 wieder nach oben in die Pressstellung Panel verlaufend zur Längs-Pressrichtung L geschwenkt, wobei sich der Quer-Pressstempel 5 und Längs-Pressstempel 4 jeweils in ihrer maximal zurückgezogenen Position befinden, in der sie gerade noch in diese Formrohr-Rinne 2.1 eintauchen, um beim Hochschwenken der Formrohr-Rinne 2.1 nicht mit dem darin befindlichen unverpressten Laib 100 zu kollidieren.

Anschließend wird gemäß **Figur 2b** der - dort nicht dargestellte - Laib gegen die Zwischenplatte 18 mittels des Längs-Pressstempels 4 vorwärts geschoben und durch Einfahren des Quer-Pressstempels 5 auch von diesem kontaktiert.

Erst durch weiteres Vorwärtsfahren der Pressstempel 4, 5 erfolgt dann das Verpressen des Laibes 100 wie anhand der **Figuren 1a****, b****,** **c** beschrieben, in Längsrichtung 10 mit der in **Figur 2b** eingezeichneten Messkraft Km.

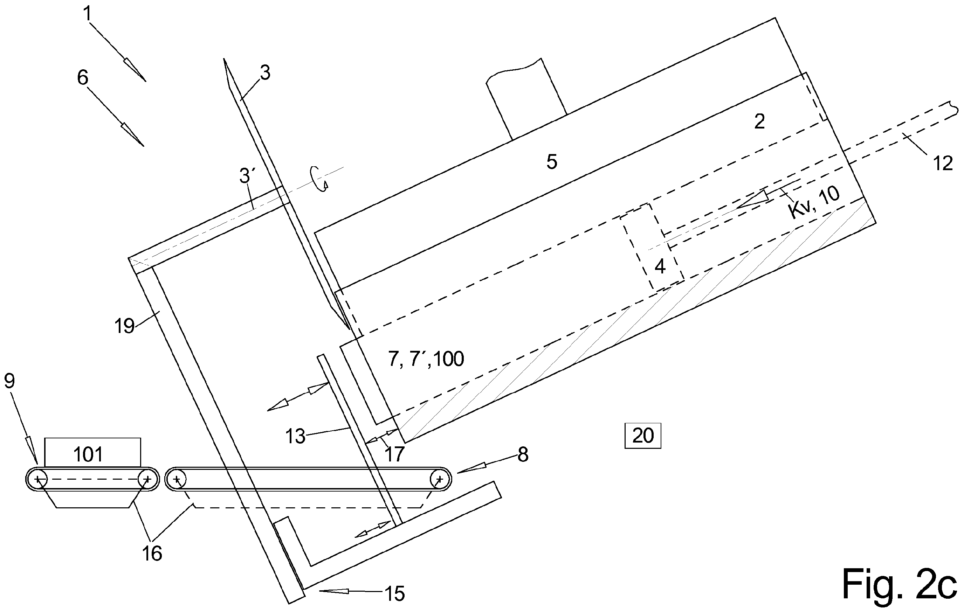

**Figur 2c** zeigt das anschließende automatische Aufschneiden des verpressten Laibes 100 in Scheiben 101:
Hierzu wird- nach Entfernen der Zwischenplatte 18 - der verpresste Laib 100 mittels des Längs-Pressstempels 4 mit einer Vorschubkraft Kv, die vorzugsweise der Messkraft Km entspricht, weiter vorwärts geschoben, und zwar über das Schneid-Ende 2a des Formrohres 2 um eine gewünschte Scheiben-Dicke hinaus, sodass der Laib 100 mit seiner vorderen Stirnfläche an einer auf eine entsprechenden Abstand 17 zum Formrohr 2 eingestellten Längs-Abstand anliegen sollte.

Wenn in Längsrichtung 10 die Stellung des Laibes 100 zum Abtrennen der nächsten Scheibe 101 auf diese Art und Weise erreicht ist, taucht die Schneidkante eines in diesem Fall um eine Messerachse 3' rotierenden, runden oder sichelförmigen, Messers 3 zunehmend in Querrichtung in den Querschnitt des Laibes 100 ein und trennt eine Scheibe ab.

Beim Eintauchen des Messers 3 wird auch die Anschlagplatte 13 in der gleichen Querrichtung bewegt, sodass die abgetrennte Scheibe 101 über die Oberkante der Anschlagplatte 13 herabkippen und auf den unmittelbar darunter befindlichen Abförderer 8 fallen kann, der diese abtransportiert und dann einen weiteren Abförderer 9 übergibt. Einer der beiden Abförderer, vorzugsweise der nachgelagerte Abförderer 9, umfasst eine Waage 16 zum Wiegen der einzelnen erzeugten Scheiben 101, und deren Gewicht kann an die Steuerung 20 der Maschine rückgemeldet werden, zum automatischen Korrigieren des Gewichts der nachfolgenden Scheiben 101.

Zu diesem Zweck sind sowohl das Messer 3 als auch die Anschlagplatte 13 beweglich an einem Grundgestell 15 der Schneideinheit 6 montiert, entlang dem die Anschlagplatte 13 in Längsrichtung 10 verstellbar ist, und entlang dem auch das an einem Tragarm 19 gehaltene Messer 3 zumindest in einer der Querrichtungen zur Längsrichtung 10, vorzugsweise der ersten Querrichtung 11.1, der Quer-Press Richtung Q des Quer-Pressstempels 5, verfahrbar ist.

### BEZUGSZEICHENLISTE

- **1**: Schneidemaschine
- **2**: Formrohr
- **2.1**: Formrohr-Rinne
- **2a**: Schneid-Ende
- **2b**: Belade-Ende
- **3**: Messer
- **3'**: Messer-Achse
- **3"**: Messer-Ebene
- **3a**: Schneidkante
- **4**: Längs-Pressstempel
- **5**: Quer-Pressstempel
- **6**: Schneideinheit
- **7**: innerer Freiraum
- **7'**: innerer freier Querschnitt
- **8**: Abförderer
- **9**: Abförderer
- **10**: Längsrichtung, axiale Richtung, Vorschubrichtung
- **11.1**: erste Querrichtung
- **11.2**: zweite Querrichtung
- **12, 12'**: Kolbenstange
- **13**: Anschlagplatte
- **14**: Zuförderer
- **15**: Grundgestell
- **16**: Waage
- **17**: Abstand
- **18**: Zwischenplatte
- **19**: Tragarm
- **20**: Steuerung
- **99**: Länge
- **100**: Laib, Fleisch-Laib
- **100"**: Querschnitt
- **100"max**: maximaler Querschnitt
- **101**: Scheibe
- **110**: Portion

- Dmax: maximale Dicke, maximale Durchmesser
- Km: Messekraft
- Kv: Vorschubkraft
- L: Längs-Pressrichtung
- +L: Längs-Presshub
- -L: Längs-Entlastungshub
- Q: Quer-Pressrichtung
- +Q: Quer-Presshub
- -Q: Quer-Entlastungshub

## Patentansprüche

1. **Verfahren,** um einen unregelmäßig geformten, länglichen Laib **(100)** aus einem elastischen Material, z.B. einen Fleisch-Laib (**100**) aus gewachsenem Fleisch, in eine Form mit über die Länge gleichmäßigem Querschnitt (100") zu bringen und anschließend in, insbesondere gewichtsgenaue, Scheiben (101) aufzuschneiden indem
a) der Laib (**100**)
- in seiner Längsrichtung (**L, 10**) sowie
- in mindestens einer Querrichtung (**Q, 11.1, 11.2**) zur Längsrichtung (10) verpresst wird, bis er einen über seine Länge (99) weitestgehend gleichmäßigen Querschnitt (100") aufweist, beim Verpressen
b) in einem 1. Pressschritt ein 1. Pressstempel (4 oder 5) in einer 1. Pressrichtung (Q oder L)
- gegen den Laib (100) angelegt wird,
- dann weiter vorwärtsgeschoben wird um einen Presshub (+Q oder +L) zum Zwecke des Verpressens,
und
c) in einem 2. Pressschritt ein 2. Pressstempel (5 oder 4) in einer 2. Pressrichtung (L oder Q)
- gegen den Laib (100) angelegt wird,
- dann weiter vorwärtsgeschoben wird um einen Presshub (+Q oder +L) zum Zwecke des Verpressens,
**dadurch gekennzeichnet, dass**
d) nach mindestens einem Presshub (+Q oder +L) der Pressstempel (4, 5) zurückgezogen wird in der entgegengesetzten Richtung hierzu um einen Entlastungshub (-Q oder -L) zum Entlasten des Laibes (100) bei mindestens einem der Pressschritte b) und/oder c),
e) ein Presshub (+Q oder +L) und/oder ein Entlastungshub (-Q oder -L) in mehreren Stufen durchgeführt wird, zwischen denen ein Presshub (+Q oder +L) in der jeweils anderen Pressrichtung durchgeführt wird.

2. Verfahren nach Anspruch **1,**
**dadurch gekennzeichnet, dass**
- die Schritte b) und/oder c) und/oder d) mehrfach hintereinander durchgeführt werden,
- wobei insbesondere bei der Wiederholung der Pressstempel (4, 5) bereits am Laib (100) anliegt.

3. Verfahren nach einem der vorhergehenden Ansprüche,
**dadurch gekennzeichnet, dass**
a) das Verpressen in einem Formrohr (2) mit einem umfänglich geschlossenen, stirnseitig beidseits offenen Form-Hohlraum, welcher entlang seiner Längsrichtung (10a) einen konstanten Querschnitt aufweist, durchgeführt wird mittels,
b)
- eines Quer-Pressstempels (5), der in einer Querrichtung **(11.1, 11.2)** des Formrohres (**2**) bewegbar ist sowie
- einem Längs-Pressstempel (4), der in der Längsrichtung (**10a**) des Formrohres (**2**) bewegbar ist.

4. Verfahren nach einem der vorhergehenden Ansprüche,
**dadurch gekennzeichnet, dass**
- der Steuerungs-Parameter für die Presshübe (+Q oder +L) und/oder die Entlastungshübe (-Q oder-L) die Presskraft oder Position des Pressstempels (4, 5) seiner Pressrichtung (Q, L) ist,
- insbesondere der Steuerungs-Parameter für die Hübe(+L oder -L) in Längsrichtung (10) die Presskraft ist.

5. Verfahren nach einem der vorhergehenden Ansprüche,
**dadurch gekennzeichnet, dass**
- das Verpressen in jedem Presshub (+Q oder +L) und das Entlasten in jedem Entlastungshub (-Q oder -L) fortgesetzt wird, bis ein für diesen Hub vorgegebener Hub-Zielwert des Steuerungs-Parameters erreicht ist,
- das Verpressen und Entlasten insgesamt fortgesetzt wird, bis ein End-Zielwert des Steuerungs-Parameters erreicht ist, wobei der End-Zielwert insbesondere der Hub-Zielwert des letzten Hubes in dieser Richtung ist, , der insbesondere eine Messkraft (Km) ist
- vor dem Erreichen des oder der End-Zielwerte für die einzelnen Pressrichtungen Hub-Zielwerte für die einzelnen Pressrichtungen vorgegeben werden können, deren Maximal-Hub-Zielwerte höher liegen als der End-Zielwert in dieser Pressrichtung, insbesondere bis zu dreimal so hoch liegen können.

6. Verfahren nach einem der vorhergehenden Ansprüche,
**dadurch gekennzeichnet, dass**
- der Steuerungsparameter, insbesondere des Längs-Pressstempels (4), die Presskraft ist,
- bei einem Presshub der Pressschritt noch vor Erreichen des Hub-Zielwertes der Presskraft angehalten wird, wenn die Vorschub-Geschwindigkeit des mit dem Hub-Zielwert der Presskraft beaufschlagten Pressstempels (4, 5) unter einen vorgegebenen Grenzwert absinkt.

7. Verfahren nach einem der vorhergehenden Ansprüche,
**dadurch gekennzeichnet, dass**
- der Steuerungsparameter des Quer-Pressstempels (5) die Presskraft ist,
- insbesondere beim Quer-Verpressen der Quer-Pressstempel (5) nur solche Quer-Positionen anfährt, dass der verbleibende freie Querschnitt des Form-Hohlraumes (7) in Quer-Pressrichtung (Q)
- mindestens der kleinsten möglichen Erstreckung des Längs-Pressstempels (4)
und/oder
höchstens der größtmöglichen Erstreckung des Längs-Pressstempels (4)
in Quer-Pressrichtung entspricht.

8. Verfahren nach einem der vorhergehenden Ansprüche,
**dadurch gekennzeichnet, dass**
- die 1. Pressrichtung eine Querrichtung (Q, 11.1, 11.2) ist und die 2. Pressrichtung die Längsrichtung (L, 10) ist,
und/oder
- während des Quer-Presshubes (+Q) der Längs-Pressstempel (4) zum Laib (100) beabstandet positioniert wird,
- insbesondere sofern der Längs-Pressstempel (4) in der Richtung des Quer-Pressrichtung (Q) eine variable Erstreckung besitzt.

9. Verfahren nach einem der vorhergehenden Ansprüche, mit folgenden Schritten (S1 bis S 4)
**dadurch gekennzeichnet, dass**
S1) in einem 1. Pressschritt der Quer-Pressstempel (5) in einer 1. Quer-Pressrichtung (Q, 11.1) gegen den Laib (100) vorwärts gefahren und ab Anlage am Leib (100) um einen Quer-Presshub (+Q) zum Verpressen weiter gefahren wird, bis ein Hub-Zielwert des Quer-Steuerungs-Parameters erreicht ist,
S2) nach diesem Presshub (+Q) der Quer-Pressstempel (5) zurückgezogen wird um einen Quer-Entlastungshub (-Q) von insbesondere 0,5 mm bis 6 mm,
S3) gleichzeitig oder danach in einem 2. Pressschritt der Längs-Pressstempel (4) in Längsrichtung (10) gegen den Laib (100) vorwärts gefahren und ab Anlage am Laib (100) um einen Längs-Presshub (+ L) zum Verpressen weiter gefahren wird, bis ein Hub-Zielwert des Längs-Steuerungs-Parameters erreicht ist,
S4) nach diesem Längs-Presshub (+ L) der Längs-Pressstempel (4) zurückgezogen wird um einen Längs-Entlastungshub (- L) von insbesondere 6 mm bis 20 mm,
- einer oder beide Pressschritte, gegebenenfalls mit erhöhten Hub-Zielwerten wiederholt werden, insbesondere
S5) der Längs-Pressstempel (4) in Längsrichtung (10) gegen den Laib (100) um einen Längs-Presshub (+ L) vorwärts gefahren wird zum Verpressen, insbesondere bis eine Längs-Messkraft (Km) an ihm anliegt,
S6)
- insbesondere nachdem die beiden End-Zielwerte in den beiden Pressrichtungen der jeweiligen Messkraft (Km) in diese Richtung entsprechen, aus der Position der beiden Pressstempel (4, 5) der Querschnitt (100"), die Länge (99) und damit das Volumen des Laibes (100) abgeschätzt werden,
- wobei vor dem Abschätzen vorzugsweise der letzte Pressschritt ein Längs-Pressschritt (+L) ist.

10. Verfahren nach einem der vorhergehenden Ansprüche,
**dadurch gekennzeichnet, dass**
nach Schritt S4 und insbesondere vor dem Pressschritt, der in Längsrichtung (10) als Hub-Zielwert die Messekraft (Km) aufweist, zunächst ein Quer-Entlastungshub (-Q) und anschließend ein Quer-Presshub(+ Q) mit jeweils dem gleichen Betrag der zurückgelegten Strecke durchgeführt wird.

11. Verfahren nach einem der vorhergehenden Ansprüche,
**dadurch gekennzeichnet, dass**
bei einem Laib (100), der eine in dessen Längsrichtung (10) teilweise oder über die gesamte Länge (99) durchgehende, mit der Kraft (Km) nicht in Längsrichtung (10) komprimierbare, Tragstruktur, insbesondere einen Knochen oder einen Knochen-Strang, aufweist, vor dem 1. Querverpressen der Laib (100) in Längsrichtung (10) an den Stirnseiten zwischen Anschlägen, von denen einer insbesondere der Längs-Pressstempel (4) ist, kraftfrei aufgenommen ist oder höchstens mit einer sehr geringen Längs-Presskraft, die insbesondere höchstens 1/10 der Längs-Messkraft (Km) beträgt, aufgenommen ist.

12. Verfahren nach einem der vorhergehenden Ansprüche,
**dadurch gekennzeichnet, dass**
- das Verpressen in die beiden Pressrichtungen (Q, L) teilweise oder vollständig zeitlich überlappend durchgeführt wird.
- insbesondere während des Zurückziehens des einen Pressstempels (4 oder 5) bereits begonnen wird, den anderen Pressstempel (5 oder 4) vorwärts zu schieben.

13. Verfahren nach einem der vorhergehenden Ansprüche,
**dadurch gekennzeichnet, dass**
- der Hub-Zielwert des Entlastungshubes (-Q oder -L) geringer gewählt wird als der Hub-Zielwert des vorangegangenen Presshubes (+Q oder +L),
- insbesondere der Hub-Zielwert des Entlastungshubes (-Q oder -L) maximal 30 %, besser maximal 20 %, besser maximal 10 % des Hub-Zielwert des Presshubes (+Q oder +L) beträgt.
insbesondere der Entlastungshub (-Q oder -L)
- in Querrichtung zwischen 2 mm und 6 mm, besser zwischen 3 mm und 5 mm, beträgt
und/oder
- in Längsrichtung zwischen 2 mm und 20 mm, besser zwischen 3 mm und 15 mm, besser zwischen 4 mm und 10 mm, beträgt.

14. Verfahren nach einem der vorhergehenden Ansprüche,
**dadurch gekennzeichnet, dass**
- beim Vorwärtsschieben eines Pressstempels (4 oder 5) der End-Zielwert seines Steuerungs-Parameters überschritten und beim Zurückziehen erreicht oder wieder unterschritten wird,
- bei der Presskraft als Steuerungs-Parameter der End-Zielwert insbesondere in Querrichtung, maximal um 250 %, besser nur maximal um 150 % besser nur maximal um 100 % überschritten wird,
und/oder
- bei der Press-Position als Steuerungs-Parameter der End-Zielwert, insbesondere in Längsrichtung, um maximal 15 mm, besser um maximal 10 mm, besser um maximal 6 mm, besser nur um maximal 4 mm, überschritten wird.

15. Verfahren nach einem der vorhergehenden Ansprüche,
**dadurch gekennzeichnet, dass**
- in einer anderen Querrichtung (11.2) die auf der Quer-Pressrichtung (11.1) gemäß einem der vorhergehenden Ansprüche senkrecht steht, ein Quer-Begrenzungsstempel wenigstens an den Laib (100) angelegt wird, insbesondere darüber hinaus in dieser anderen Querrichtung (11.2) vorwärtsgeschoben wird,
- insbesondere bis zu einer von insbesondere mehreren Zielpositionen in dieser anderen Querrichtung (11.2).

16. **Maschine (1)** um einen unregelmäßig geformten Laib (**100**) aus einem elastischen, Material, z.B. einen Fleisch-Laib (**100**), in eine Form mit über seine Länge (99) gleichmäßigem Querschnitt (100") zu bringen und insbesondere anschließend in, insbesondere gewichtsgenaue, Scheiben (101) aufzuschneiden, wobei die Maschine (**1**)
- mindestens ein vorne und hinten offenes, in Längsrichtung (**10**), der Axialrichtung, verlaufendes Formrohr (**2**) für je einen Laib (**100**) umfasst, vorzugsweise mehrere solche parallel nebeneinander angeordnete Formrohre (**2**),
- für jedes der Formrohre (**2**) ein Längs-Pressstempel (**4**) vorhanden ist, der passgenau im Formrohr (**2**) vom hinteren Belade-Ende (**2b**) aus in Längsrichtung (**10**) des Formrohres (**2**) und zurück verschiebbar ist,
- für jedes der Formrohre (**2**) ein Quer-Pressstempel (**5**) als Teil der Wandung des Formrohres (2) vorhanden ist, der in die Formrohrrinne (**2**), die den Rest des Formrohres bildet radial in Quer-Pressrichtung (**11.1, 11.2**) des Formrohres (**2.1**) einschiebbar ist,
- ein Axial-Anschlag für den Laib (100) am vorderen Schneid-Ende (2a) des Formrohres (**2**) oder in dessen vorderen Endbereich vorhanden ist,
- eine Steuerung (**20**) umfasst, die alle beweglichen Teile der Maschine (**1**) steuert,
- vor dem vorderen Schneidende (**2a**) des Formrohres (**2**) ein Messer (**3**) zum Abtrennen von Scheiben (**101**) von dem mindestens einen Strang (**100**) angeordnet ist,
**dadurch gekennzeichnet, dass**
- die Steuerung (20) in der Lage ist, die beweglichen Teile der Maschine (1) gemäß dem Verfahren nach einem der vorhergehenden Ansprüche zu steuern,
- hierfür die Maschine Sensoren umfasst, die Parameter messen, die für die Steuerung des Verfahrens von Bedeutung sind, beispielsweise Drucksensoren, Kraftsensoren oder Positionssensoren an den Pressstempeln, Drucksensoren oder Kraftsensoren in den Innenflächen des Formrohres und/oder an dem Längsanschlag.

## Claims

1. **Method** for forming an irregularly shaped, elongated loaf (**100**) of an elastic material, e.g. a meat loaf (**100**) of unprocessed meat, into a shape that has a uniform cross section (100") across its length, and for subsequently cutting it into slices (101), in particular accurately weighted slices, by
a) pressing the loaf (**100**)
- in its longitudinal direction (**L, 10**) as well as
- in at least a transversal direction **(Q, 11.1, 11.2)** to the longitudinal direction (10)
until it has a mostly uniform cross section (100") across its length (99), during pressing
b) in a first pressing step, a first pressing plunger (4 or 5) is placed
- against the loaf (100) in a first pressing direction (Q or L),
- then is advanced further by a pressing stroke (+Q or +L) for the purpose of pressing,
and
c) in a second pressing step, a second pressing plunger (5 or 4) is placed
- against the loaf (100) in a second pressing direction (L or Q),
- then is advanced further by a pressing stroke (+Q or +L) for the purpose of pressing,
**characterized in that**
d) following at least one pressing stroke (+Q or +L), the pressing plunger (4, 5) is withdrawn in the opposite direction by a relieving stroke (-Q or -L) to relief the loaf (100) in at least one of the pressing steps b) and/or c),
e) a pressing stroke (+Q or +L) and/or a relieving stroke (-Q or -L) can be performed in multiple stages, between which in particular a pressing stroke (+Q or +L) can be performed in the respectively other pressing direction.

2. Method according to claim **1,**
**characterized in that**
- the steps b) and/or c) and/or d) are performed multiple time in succession,
- wherein, in particular during repetition, the pressing plunger (4, 5) already rests against the loaf (100).

3. Method according to any of the preceding claims,
**characterized in that**
a) the pressing is performed in a forming tube (2) with a circumferentially closed hollow forming space that is already open at both face ends and has a constant cross section along its longitudinal direction (10a) by means of
b)
- a transversal pressing plunger (5) that can be moved in a transversal direction **(11.1, 11.2)** of the forming tube (**2**), as well as
- a longitudinal pressing plunger (4) that can be moved in the longitudinal direction (**10a**) of the forming tube (**2**).

4. Method according to any of the preceding claims,
**characterized in that**
- the control parameters for the pressing strokes (+Q or +L) and/or the relieving strokes (-Q or -L) are the compressive force or the position of the pressing plunger (4, 5) of its pressing direction (Q, L),
- in particular the control parameter for the strokes (+L or -L) in the longitudinal direction (10) is the compressive force.

5. Method according to any of the preceding claims,
**characterized in that**
- the pressing is continued in each pressing stroke (+Q or +L) and the relief is continued in each relieving stroke (-Q or-L) until a stroke target value of the control parameter that is predefined for this stroke is reached,
- the pressing and relief are in total continued until an end target value of the control parameter is reached, wherein the end target value is in particular the stroke target value of the last stroke in this direction, which is in particular a measuring force (Km),
- before the end target value(s) for the individual pressing directions are reached, stroke target values for the individual pressing directions can be predefined, with their maximum stroke target values being higher than the end target value in this pressing direction, in particular they can be up to three times as high.

6. Method according to any of the preceding claims,
**characterized in that**
- the control parameter, in particular of the longitudinal pressing plunger (4), is the compressive force,
- in a pressing stroke, the pressing step is stopped even before the stroke target value of the compressive force is reached if the feed velocity of the pressing plunger (4, 5) to which the stroke target value of the compressive force is applied falls below the predefined threshold value.

7. Method according to any of the preceding claims,
**characterized in that**
- the control parameter of the transversal pressing plunger (5) is the compressive force,
- in particular during transversal pressing, the transversal pressing plunger (5) only moves into such transversal positions that the remaining free cross section of the hollow forming space (7) in the transversal pressing direction (Q) corresponds to
- at least the smallest possible extension of the longitudinal pressing plunger (4),
and/or
to no more than the maximally possible extension of the longitudinal pressing plunger (4) in the transversal pressing direction.

8. Method according to any of the preceding claims,
**characterized in that**
- the first pressing direction is a transversal direction (Q, 11.1, 11.2) and the second pressing direction is the longitudinal direction (L, 10),
and/or
- during the transversal pressing stroke (+Q), the longitudinal pressing plunger (4) is positioned at a distance to the loaf (100),
- in particular if the longitudinal pressing plunger (4) has a variable extension in the direction of the transversal pressing direction (Q).

9. Method according to any of the preceding claims, with the following steps (S1 to S 4)
**characterized in that**
S1) in a first pressing step, the transversal pressing plunger (5) is moved forwards in a first transversal pressing direction (Q, 11.1) against the loaf (100) and, as soon as it rests against the loaf (100), is moved further by a transversal pressing stroke (+Q) for pressing until a stroke target value of the transversal control parameter is reached,
S2) following this pressing stroke (+Q), the transversal pressing plunger (5) is withdrawn by a transversal relieving stroke (-Q) of in particular 0.5 mm to 6 mm,
S3) simultaneously or subsequently, in a second pressing step, the longitudinal pressing plunger (4) is moved forwards (10) against the loaf (100) in the longitudinal direction and, as soon as it rests against the loaf (100), is moved further by a longitudinal pressing stroke (+ L) for pressing until a stroke target value of the longitudinal control parameter is reached,
S4) following this longitudinal pressing stroke (+ L) ,the longitudinal pressing plunger (4) is withdrawn by a longitudinal relieving stroke (- L) of in particular 6 mm to 20 mm,
- where appropriate, one or both pressing steps are repeated with increased stroke target values, in particular
S5) the longitudinal pressing plunger (4) is moved forward in the longitudinal direction (10) against the loaf (100) by a longitudinal pressing stroke (+L) for pressing, in particular until a longitudinal measuring force (Km) is applied to it,
S6)
- in particular after the two end target values in the two pressing directions correspond to the respective measuring force (Km) in this direction, the cross section (100"), the length (99) and thus the volume of the loaf (100) are estimated based on the position of the two pressing plungers (4, 5),
- wherein, prior to the estimation, the last pressing step is preferably a longitudinal pressing step (+L).

10. Method according to any of the preceding claims,
**characterized in that**
following step S4 and in particular prior to the pressing step which has the measuring force (Km) as the stroke target value in the longitudinal direction (10), at first a transversal relieving stroke (-Q) and subsequently a transversal pressing stroke (+ Q) are performed with respectively the same value of the distance travelled.

11. Method according to any of the preceding claims,
**characterized in that**
in a loaf (100) that has a support structure in its longitudinal direction (10) that extends partially or entirely across its length (99) and that cannot be compressed with the force (Km) in the longitudinal direction (10), in particular a bone or a bone strand, the loaf (100) is received without force or at most with a very low longitudinal compressive force, which is in particular no more than 1/10 of the longitudinal measuring force (Km), before the first transverse pressing in the longitudinal direction (10) at the face ends between end stops, of which one is in particular the longitudinal pressing plunger (4).

12. Method according to any of the preceding claims,
**characterized in that**
- the pressing is performed in both pressing directions (Q, L) with a partial or complete time overlap,
- in particular the one pressing plunger (5 or 4) already begins to advance while the other pressing plunger (4 or 5) is being withdrawn.

13. Method according to any of the preceding claims,
**characterized in that**
- the stroke target value of the relieving stroke (-Q or -L) is chosen so as to be smaller than the stroke target value of the previous pressing stroke (+Q or +L),
- in particular, the stroke target value of the relieving stroke (-Q or -L) is maximally 30%, better maximally 20%, better maximally 10% of the stroke target value of the pressing stroke (+Q or +L).
in particular the relieving stroke (-Q or -L)
- is between 2 mm and 6 mm, better between 3 mm and 5 mm, in the transversal direction
and/or
- is between 2 mm and 20 mm, better between 3 mm and 15 mm, better between 4 mm and 10 mm, in longitudinal direction.

14. Method according to any of the preceding claims,
**characterized in that**
- as the pressing plunger (4 or 5) is being advanced, the end target value of its control parameter is exceeded, and is reached or undershot again as it is being withdrawn,
- with the compressive force as the control parameter, the end target value is exceeded by maximally 250%, better only by maximally 150% better only by maximally 100%, in particular in the transversal direction,
and/or
- with the pressing position as the control parameter, the end target value is exceeded by maximally 15 mm, better by maximally 10 mm, better by maximally 6 mm, better only by maximally 4 mm, in particular in the longitudinal direction.

15. Method according to any of the preceding claims,
**characterized in that**
- in another transversal direction (11.2), which is positioned perpendicularly with respect to the transversal pressing direction (11.1) according to one of the preceding claims, a transversal restricting plunger at least rests against the loaf (100), in particular is pushed forwards beyond it in this other transversal direction (11.2),
- in particular up to one of in particular multiple target positions in this other transversal direction (11.2).

16. Machine (**1**) for forming an irregularly shaped loaf (**100**) of an elastic material, e.g. a meat loaf (**100**), so that it has a cross section (100") that is uniform across its entire length (99), and in particular for subsequently cutting it into slices (101), in particular accurately weighted slices, wherein the machine (**1**)
- comprises at least one forming tube (**2**) that is open in the front and the back, and extends in the longitudinal direction (**10**), the axial direction, for respectively one loaf (**100**)**,** and preferably comprises multiple such forming tubes (**2**) arranged in parallel next to each other,
- for each of the forming tubes (**2**), a longitudinal pressing plunger (**4**) is present, which can be displaced in a precisely fitting manner inside the forming tube (**2**) from the rear loading end (**2b**) in the longitudinal direction (**10**) of the forming tube (**2**) and back,
- for each of the forming tubes (**2**), a transversal pressing plunger (**5**) is present as a part of the wall of the forming tube (2), which can be radially inserted into the forming tube duct (**2**), which forms the rest of the forming tube, in the transversal pressing direction (**11.1, 11.2**) of the forming tube (**2.1**),
- an axial stop collar for the loaf (100) is present at the frontal cutting blade end (2a) of the forming tube (**2**) or in its frontal end area,
- comprising a control (**20**) that controls all movable parts of the machine (**1**),
- a blade (**3**) for cutting off slices **(101)** from the at least one strand (**100**) is arranged in front of the frontal cutting edge end (**2a**) of the forming tube (**2**).

## Revendications

1. **Procédé** pour façonner une miche (**100**) de forme irrégulière, allongé, en un matériau élastique, par exemple une miche de viande (**100**) de viande cultivée, en une forme ayant une section transversale (**100**") uniforme sur la longueur et pour le couper ensuite en tranches (**101**), en particulier en tranches (**101**) de même poids, en ce que
a) la miche (**100**)
- dans sa direction longitudinale (**L, 10**) et
- dans au moins une direction **(Q, 11.1, 11.2)** transversale à la direction longitudinale (**10**) est pressée jusqu'à ce qu'elle présente une section transversale (**100**") aussi uniforme que possible sur sa longueur (**99**)**,**
pendant la pression
b) dans une 1ère étape de pressage, un 1er piston de pressage (4 ou 5) est appliqué dans une 1ère direction de pressage (Q ou L)
- contre la miche (**100**),
- est ensuite avancé par une course de pressage (+Q ou +L) dans le but de presser,
et
c) dans une 2ème étape de pressage, un 2ème piston de pressage (5 ou 4) est appliqué dans une 2ème direction de pressage (L ou Q)
- contre la miche (**100**)**,**
- est ensuite avancé par une course de pressage (+Q ou +L) dans le but de presser,
**caractérisé en ce que**
d) après au moins une course de pressage (+Q ou +L), le piston de pressage (**4, 5**) est retiré dans la direction opposée à celle-ci par une course de décharge (-Q ou -L) pour décharger la miche (**100**) dans au moins une des étapes de pressage b) et/ou c),
e) une course de pressage (+Q ou +L) et/ou une course de décharge (-Q ou -L) est effectuée en plusieurs étapes, entre lesquelles une course de pressage (+Q ou +L) est effectuée dans l'autre direction de pressage respective.

2. Méthode selon la revendication 1,
**caractérisé en ce que**
- les étapes b) et/ou c) et/ou d) sont réalisées plusieurs fois de suite,
- dans lequel, en particulier pendant la répétition, le piston de pressage (**4**, **5**) est déjà en contact avec la miche (**100**)**.**

3. Procédé selon l'une des revendications précédentes,
**caractérisé en ce que**
a) le pressage est effectué dans un tube de moulage (**2**) avec une cavité de moulage fermée circonférentiellement et ouverte aux deux extrémités qui a une section transversale constante le long de sa direction longitudinale (**10a**), par les moyens suivants
b)
- un piston de pressage transversal (**5**) qui est mobile dans une direction de pressage transversale (**11.1, 11.2**) du tube de moulage (**2**) et
- un piston de pressage longitudinal (**4**) qui est mobile dans la direction longitudinale (**10a**) du tube de moulage (**2**).

4. Procédé selon l'une des revendications précédentes,
**caractérisé en ce que**
- le paramètre de commande pour les courses de pressage (+Q ou +L) et/ou les courses de décharge (-Q ou-L) est la force de pressage ou la position du piston de pressage (**4, 5**) de sa direction de pressage (Q, L),
- en particulier le paramètre de commande des courses (+L ou -L) dans la direction longitudinale (**10**) est la force de pression.

5. Procédé selon l'une quelconque des revendications précédentes, **caractérisé en ce que**
- le pressage est poursuivie dans chaque course de pressage (+Q ou +L) et la décharge est poursuivie dans chaque course de décharge (-Q ou -L) jusqu'à ce qu'une valeur cible de course prédéterminée du paramètre de commande soit atteinte pour cette course,
- le pressage et la décharge sont poursuivis dans leur ensemble jusqu'à ce qu'une valeur cible finale du paramètre de commande soit atteinte, la valeur cible finale étant en particulier la valeur de course cible de la dernière course dans cette direction, qui est en particulier une force de mesure (Km),
- avant que la ou les valeurs cibles finales pour les différentes directions de pressage ne soient atteintes, des valeurs cibles de course peuvent être spécifiées pour les différentes directions de pressage dont les valeurs cibles de course maximales sont plus élevées que la valeur cible finale dans cette direction de pressage, en particulier peuvent être jusqu'à trois fois plus élevées.

6. Procédé selon l'une des revendications précédentes,
**caractérisé en ce que**
- le paramètre de commande, en particulier du piston de pressage longitudinal (**4**), est la force de pressage,
- pendant une course de pressage, l'étape de pressage est arrêtée avant même que la valeur cible de course de la force de pressage soit atteinte si la vitesse d'avance du piston de pressage (4, 5) sollicité par la valeur cible de course de la force de pressage tombe en dessous d'une valeur limite prédéterminée.

7. Procédé selon l'une des revendications précédentes,
**caractérisé en ce que**
- le paramètre de commande du piston de pressage transversal (5) est la force de pressage,
- en particulier pendant le pressage transversal, le piston de pressage transversal (5) ne se déplace que dans des positions transversales telles que la section libre restante de la cavité de moule (7) dans la direction de pressage transversale (Q)
- correspond au moins à la plus petite extension possible du piston de pressage longitudinal (4) et/ou au plus à la plus grande extension possible du piston de pressage longitudinal (4) dans la direction de pressage transversale.

8. Procédé selon l'une des revendications précédentes,
**caractérisé en ce que**
- la 1ère direction de pressage est une direction transversale **(Q, 11.1, 11.2)** et la 2ème direction de pressage est la direction longitudinale (**L, 10**),
et/ou
- pendant la course de pressage transversale (+Q), le piston de pressage longitudinal (4) est positionné à une distance de la miche (**100**),
- en particulier si le piston de pressage longitudinal (**4**) présente une extension variable dans la direction de la direction de pressage transversale (Q).

9. Procédé selon l'une des revendications précédentes, comprenant les étapes suivantes (S1 à S4)
**caractérisé en ce que**
S1) dans une 1ère étape de pressage, le piston de pressage transversal (5) est déplacé vers l'avant dans une 1ère direction de pressage transversal (Q, 11.1) contre la miche (**100**) et, à partir du contact avec la miche (**100**), est déplacé plus loin par une course de pressage transversal (+Q) pour presser jusqu'à ce qu'une valeur cible de course du paramètre de commande transversal soit atteinte,
S2) après cette course de pressage (+Q), le piston de pressage transversal (5) est retiré d'une course de décharge transversale (-Q), notamment de 0,5 mm à 6 mm,
S3) en même temps ou ensuite, dans une 2ème étape de pressage, le piston de pressage longitudinal (**4**) est déplacé vers l'avant dans la direction longitudinale (**10**) contre la miche (**100**) et, à partir du contact avec la miche (**100**), est déplacé plus loin par une course de pressage longitudinale (+L) pour presser jusqu'à ce qu'une valeur cible de course du paramètre de commande longitudinal soit atteinte,
S4) après cette course de pressage longitudinale (+L), le piston de pressage longitudinal (**4**) est retiré d'une course de décharge longitudinale (-L), notamment de 6 mm à 20 mm,
- l'une ou les deux étapes de pressage sont répétées, si nécessaire avec des valeurs cibles de course plus élevées, en particulier S5) le piston de pressage longitudinal (**4**) est déplacé vers l'avant dans la direction longitudinale (**10**) contre la miche (**100**) par une course de pressage longitudinale (+L) pour le pressage, en particulier jusqu'à ce qu'une force de mesure longitudinale (Km) lui soit appliquée,
S6)
- en particulier après que les deux valeurs cibles finales dans les deux directions de pressage correspondent à la force de mesure respective (Km) dans cette direction, la section transversale (**100**"), la longueur (99) et donc le volume de la miche (**100**) sont estimés à partir de la position des deux pistons de pressage (**4, 5**),
- dans lequel, avant l'estimation, de préférence la dernière étape de pressage est une course de pressage longitudinale (+L).

10. Procédé selon l'une quelconque des revendications précédentes,
**caractérisé en ce que**
après l'étape S4 et en particulier avant l'étape de pressage, qui dans la direction longitudinale (**10**) a la force de mesure (Km) comme valeur cible de la course, on effectue d'abord une course de décharge transversale (-Q) et ensuite une course de pressage transversale (+Q), chacune avec la même quantité de la distance parcourue.

11. Procédé selon l'une des revendications précédentes,
**caractérisé en ce que**, dans le cas d'une miche (**100**) qui présente une structure de support, en particulier un os ou un brin d'os, qui est continu dans la direction longitudinale (**10**) de celui-ci partiellement ou sur toute la longueur (**99**) et ne peut pas être comprimé dans la direction longitudinale (**10**) par la force (Km), la miche (**100**) est comprimé avant le premier pressage transversal de la miche (**100**) dans la direction longitudinale (**10**) sur les faces frontales entre les butées, dont l'une est en particulier le piston de pressage longitudinal (**4**), s'effectue sans force ou tout au plus avec une très faible force de pressage longitudinal, qui est en particulier au maximum de 1/10 de la force de mesure longitudinale (Km).

12. Procédé selon l'une des revendications précédentes,
**caractérisé en ce que**
- le pressage dans les deux directions de pressage (Q, L) est effectué en se chevauchant partiellement ou complètement dans le temps,
- en particulier pendant la rétraction d'un piston de pressage (4 ou 5), l'autre piston de pressage (5 ou 4) commence déjà à être poussé vers l'avant.

13. Procédé selon l'une des revendications précédentes,
**caractérisé en ce que**
- la valeur cible de course de la course de décharge (-Q ou -L) est sélectionnée pour être inférieure à la valeur cible de course de la course de pressage précédente (+Q ou +L),
- en particulier la valeur cible de course de la course de décharge (-Q ou -L) est au maximum de 30%, mieux au maximum de 20%, mieux au maximum de 10%, de la valeur cible de la course de pressage (+Q ou +L), en particulier la course de décharge (-Q ou -L),
- dans la direction transversale est comprise entre 2 mm et 6 mm, mieux entre 3 mm et 5 mm
et/ou
- dans la direction longitudinale est comprise entre 2 mm et 20 mm, mieux entre 3 mm et 15 mm, mieux entre 4 mm et 10 mm.

14. Procédé selon l'une quelconque des revendications précédentes,
**caractérisé en ce que**
- la valeur cible finale de son paramètre de commande est dépassée lorsqu'un piston de pressage (4 ou 5) est poussé vers l'avant et est atteinte ou sousdépassé lorsqu'il est tiré vers l'arrière,
- dans le cas de la force de pressage en tant que paramètre de commande, la valeur cible finale, en particulier dans la direction transversale, est dépassée de 250% au maximum, mieux seulement de 150% au maximum, mieux seulement de 100% au maximum,
et/ou
- dans le cas de la position de pressage comme paramètre de commande, la valeur cible finale, en particulier dans la direction longitudinale, est dépassée de 15 mm au maximum, mieux de 10 mm au maximum, mieux de 6 mm au maximum, mieux seulement de 4 mm au maximum.

15. Procédé selon l'une quelconque des revendications précédentes, **caractérisé en ce que**
- dans une autre direction transversale (11.2) qui est perpendiculaire à la direction de pressage transversale (11.1) selon l'une des revendications précédentes, un piston de limitation transversale est appliqué au moins sur la miche (**100**), en particulier est poussé vers l'avant dans cette autre direction transversale (11.2),
- en particulier jusqu'à l'une, en particulier plusieurs positions cibles dans cette autre direction transversale (11.2).

16. **Machine (1)** pour façonner une miche **(100)** de forme irrégulière en matériau élastique, par exemple une miche de viande **(100),** en une forme ayant une section transversale **(100")** uniforme sur sa longueur **(99),** et en particulier pour le couper ensuite en tranches **(101),** en particulier en tranches de même poids, dans lequel la machine **(1)** comprend
- au moins un tube de moulage **(2)** ouvert à l'avant et à l'arrière et s'étendant dans la direction longitudinale **(10),** la direction axiale, pour une miche **(100)** chacun, de préférence plusieurs de ces un tube de moulage **(2)** disposés parallèlement les uns à côté des autres,
- pour chacun des tubes de moulage **(2),** il y a un piston de pressage longitudinal **(4)** qui peut être déplacé avec un ajustement précis dans le tube de moulage **(2)** depuis l'extrémité de chargement arrière **(2b)** dans la direction longitudinale **(10)** du tube de moulage **(2)** et en sens inverse,
- pour chacun des tubes de moulage **(2),** il existe un piston de pressage transversal **(5)** faisant partie de la paroi du tube de moulage **(2),** qui peut être poussé radialement dans la direction de pressage transversale **(11.1, 11.2)** du tube de moulage **(2.1)** dans le canal du tube de moulage **(2)** qui forme le reste du tube de moulage,
- une butée axiale pour la miche **(100)** est prévue à l'extrémité de coupe avant **(2a)** du tube de moulage **(2)** ou dans la zone d'extrémité avant de celui-ci,
- comprend une commande **(20)** qui commande toutes les parties mobiles de la machine **(1),**
- un couteau **(3)** pour couper des tranches **(101)** dudit au moins un brin **(100)** est disposé devant l'extrémité de coupe avant **(2a)** du tube de moulage **(2)**
**caractérisé en ce que**
- le système de commande **(20)** est capable de commander les parties mobiles de la machine **(1)** selon le procédé selon l'une des revendications précédentes,
- pour lesquels la machine comprend des capteurs mesurant des paramètres importants pour la commande du processus, par exemple des capteurs de pression, des capteurs de force ou des capteurs de position sur les pistons de pressage, des capteurs de pression ou des capteurs de force dans les surfaces intérieures du tube de formage et/ou sur la butée longitudinale.
